# EUROPÄISCHE PATENTSCHRIFT

(11) **EP 2 328 778 B1**
(45) Veröffentlichungstag und Bekanntmachung des Hinweises auf die Patenterteilung: **08.11.2017**
(21) Anmeldenummer: 09776096.1
(22) Anmeldetag: 12.08.2009
(51) Int. Cl.: B60Q 1/00, F21S 8/10, F21Y 115/10

(54) **SCHEINWERFER MIT EINER MEHRZAHL VON LUMINESZENZDIODENEMITTERN**
HEADLIGHT HAVING A PLURALITY OF LUMINESCENT DIODE EMITTERS
PHARE COMPRENANT UNE PLURALITÉ D'ÉMETTEURS À DIODES ÉLECTROLUMINESCENTES

(30) Priorität: 29.09.2008 DE 102008049398
(43) Veröffentlichungstag der Anmeldung: 08.06.2011
(73) Patentinhaber: OSRAM Opto Semiconductors GmbH, 93055 Regensburg (DE)
(72) Erfinder: BOGNER, Georg, 93138 Lappersdorf (DE); REILL, Joachim, 93197 Zeitlarn (DE); ZEILER, Thomas, 93152 Nittendorf (DE)
(74) Vertreter: Epping - Hermann - Fischer
(86) Internationale Anmeldenummer: PCT/DE2009/001153
(87) Internationale Veröffentlichungsnummer: WO 2010/034276

(56) Entgegenhaltungen:
- DE-A1- 3 723 299
- US-A1- 2004 263 346
- US-A1- 2008 062 706

## Beschreibung

Scheinwerfer mit einer Mehrzahl von Lumineszenzdiodenemittern Diese Patentanmeldung beansprucht die Priorität der deutschen Patentanmeldung 10 2008 049 398.8. Die vorliegende Anmeldung betrifft einen Scheinwerfer mit einer Mehrzahl von Lumineszenzdiodenemittern.

Es sind Scheinwerfer bekannt, die beispielsweise eine Mehrzahl von Lumineszenzdiodenemittern in Form von Lumineszenzdiodenbauelementen aufweisen. Die Lumineszenzdiodenbauelemente enthalten ein Bauelementgehäuse, in dem mindestens ein Lumineszenzdiodenchip mechanisch und elektrisch montiert ist.

Aus der Druckschrift US 2004/0263346 A1 ist ein adaptives Frontscheinwerfersystem (adaptive forward lighting system, "AFS") bekannt, bei dem eine Matrix von Licht emittierenden Dioden in einem Gehäuse vorgesehen ist. Jede Zeile der Matrix ist mit einem horizontalen Treiber, jede Spalte mit einem vertikalen Treiber elektrisch verbunden.

In der Druckschrift US 2008/0062706 A1 ist ein Beleuchtungsbauteil für Automobile beschrieben, bei dem LEDs in einer Matrix angeordnet sind. In der Matrix kann die Helligkeit zum Bilden vorgegebener Helligkeitsmuster räumlich variiert werden.

Es ist eine Aufgabe, einen Scheinwerfer mit Lumineszenzdiodenemittern anzugeben, der technisch auf einfache Weise realisierbar ist und der ein hohes Maß an Flexibilität hinsichtlich der Realisierung verschiedener Scheinwerferfunktionen bietet. Die verschiedenen Scheinwerferfunktionen sollen insbesondere das Ausbilden unterschiedlich großer und unterschiedlich geformter Scheinwerferemissionskegel umfassen.

Diese Aufgabe wird durch einen Scheinwerfer mit den Merkmalen des Patentanspruchs 1 gelöst.

Es wird ein Scheinwerfer angegeben, bei dem zumindest eine erste Gruppe der Lumineszenzdiodenemitter jeweils zwei elektrische Anschlüsse von unterschiedlichem Anschlusstyp aufweisen und in einer Matrix mit mindestens zwei Spalten und mindestens zwei Zeilen angeordnet sind.

Ein erster Anschlusstyp ist beispielsweise die Anode des Lumineszenzdiodenemitters und ein zweiter Anschlusstyp beispielsweise die Kathode. Es kann jedoch auch umgekehrt sein und insbesondere auch für verschiedene Gruppen der Lumineszenzdiodenemitter unterschiedlich sein.

Die Matrix muss nicht notwendigerweise eine geordnete oder symmetrische Anordnung sein. Sie kann grundsätzlich auch Unregelmäßigkeiten oder in Draufsicht eine unsymmetrische Form aufweisen.

In der ersten Gruppe sind die elektrischen Anschlüsse eines ersten Anschlusstyps spaltenweise jeweils elektrisch miteinander verbunden und die elektrischen Anschlüsse eines zweiten Anschlusstyps sind zeilenweise jeweils elektrisch miteinander verbunden. Die elektrischen Anschlüsse des ersten Anschlusstyps verschiedener Spalten sind elektrisch voneinander isoliert und die elektrischen Anschlüsse des zweiten Anschlusstyps verschiedener Zeilen sind elektrisch voneinander isoliert. Diese Art der elektrischen Zusammenschaltung der Lumineszenzdiodenemitter einer Gruppe wird im Folgenden Matrix-Zusammenschaltung genannt.

Die Lumineszenzdiodenemitter der ersten Gruppe sind also nicht jeweils einzeln elektrisch leitend kontaktiert und vollständig unabhängig voneinander ansteuerbar. Auch eine serielle Ansteuerung mehrerer Lumineszenzdiodenemitter ist zumindest bei der ersten Gruppe nicht vorgesehen. Stattdessen sind die einzelnen Lumineszenzdiodenemitter der ersten Gruppe in einer Matrix-Zusammenschaltung elektrisch miteinander verbunden.

Durch diese Art der Zusammenschaltung kann die Anzahl der elektrischen Anschlüsse zur Ansteuerung der Lumineszenzdiodenemitter verglichen mit einer Einzelansteuerung reduziert werden. Gleichzeitig bietet eine derartige Verschaltung von Lumineszenzdiodenemittern ein hohes Maß an Flexibilität hinsichtlich der Realisierung verschiedener Scheinwerferfunktionen. Weiterhin kann diese Art der Zusammenschaltung eine besonders enge Anordnung der Lumineszenzdiodenemitter zueinander ermöglichen.

Der Scheinwerfer kann auch Lumineszenzdiodenemitter aufweisen, die nicht in einer Matrix angeordnet und in einer Matrix-Zusammenschaltung mit anderen Lumineszenzdiodenemittern elektrisch leitend verschaltet sind.

Im Scheinwerfer ist mindestens eine zweite Gruppe von Lumineszenzdiodenemittern enthalten. Die Lumineszenzdiodenemitter der zweiten Gruppe weisen jeweils zwei elektrische Anschlüsse von unterschiedlichem Anschlusstyp auf. In der zweiten Gruppe sind die elektrischen Anschlüsse eines ersten Anschlusstyps spaltenweise jeweils elektrisch miteinander verbunden, die elektrischen Anschlüsse eines zweiten Anschlusstyps zeilenweise jeweils elektrisch miteinander verbunden, die elektrischen Anschlüsse des ersten Anschlusstyps verschiedener Spalten elektrisch voneinander isoliert sind und die elektrischen Anschlüsse des zweiten Anschlusstyps verschiedener Zeilen elektrisch voneinander isoliert.

Dabei muss der erste Anschlusstyp der zweiten Gruppe nicht derselbe Anschlusstyp sein wie der erste Anschlusstyp der ersten Gruppe oder einer anderen Gruppe. Es können generell bei der Verschaltung auch Zeilen Spalten vertauscht werden. Entscheidend ist, dass jede Gruppe für sich eine Matrix- Verschaltung aufweist, mit einer zeilenweisen Verschaltung erster elektrischer Anschlüsse und einer spaltenweisen Verschaltung zweiter elektrischer Anschlüsse, oder umgekehrt. Die ersten elektrischen Anschlüsse und die zweiten elektrischen Anschlüsse innerhalb einer Gruppe müssen einen unterschiedlichen Anschlusstyp aufweisen. Beispielsweise kann der erste Anschlusstyp in der ersten Gruppe die Kathode sein, während der erste Anschlusstyp in der zweiten Gruppe die Anode ist. Es kann selbstverständlich auch umgekehrt sein. Es versteht sich auch, dass der erste Anschlusstyp der ersten Gruppe gleich dem ersten Anschlusstyp der zweiten Gruppe sein kann.

Die elektrischen Anschlüsse der Lumineszenzdiodenemitter der ersten Gruppe sind elektrisch von den elektrischen Anschlüssen der Lumineszenzdiodenemitter der zweiten Gruppe isoliert.

Der Scheinwerfer mit mindestens zwei Gruppen von Lumineszenzdiodenemittern, die jeweils untereinander die angegebene Matrix-Verschaltung aufweisen, kann für bestimmte zu realisierende Scheinwerferfunktionen eine verbesserte Ansteuerbarkeit bieten als ein Scheinwerfer mit einer einzigen Gruppe von Lumineszenzdiodenemittern, die untereinander eine Matrix-Verschaltung aufweisen.

Bei einer Weiterbildung des Scheinwerfers mit der ersten und der zweiten Gruppe von Lumineszenzdiodenemittern weist dieser eine Scheinwerferfunktion auf, bei der zumindest einige der Lumineszenzdiodenemitter der ersten und der zweiten Gruppe betrieben werden. Ein oder mehrere Lumineszenzdiodenemitter der ersten Gruppe, der zweiten Gruppe oder sowohl der ersten als auch der zweiten Gruppe werden bei der Scheinwerferfunktion nicht betrieben. Auch durch diese Maßnahme kann eine vorteilhafte Ansteuerung der Lumineszenzdiodenemitter realisiert werden. Grundsätzlich kann eine Vielzahl an Leuchtmustern erzeugt werden, durch die auch neuartige Scheinwerferfunktionen möglich sind.

Bei einer zusätzlichen Ausführungsform des Scheinwerfers sind mehr als die Hälfte der Lumineszenzdiodenemitter in der ersten Gruppe enthalten.

Eine Ausgestaltung des Scheinwerfers sieht vor, das dieser eine Scheinwerferfunktion aufweist, bei der zumindest ein Teil der Lumineszenzdiodenemitter zur Erzeugung eines Scheinwerferkegels betrieben wird und mindestens ein erster und ein zweiter Teil der betriebenen Lumineszenzdiodenemitter in einem seriellen Pulsbetrieb betrieben wird. Bei der Scheinwerferfunktion wird also der erste und der zweite Teil der betriebenen Lumineszenzdiodenemitter nicht durchgehend betrieben, sondern jeweils immer wieder an und ausgeschaltet.

Bei der Scheinwerferfunktion mit seriellem Pulsbetrieb ist bei einer weiteren Ausführungsform zusätzlich vorgesehen, dass ein weiterer Teil der Lumineszenzdiodenemitter durchgehend betrieben wird.

Bei der Ausführungsform des Scheinwerfers mit der Scheinwerferfunktion mit seriellem Pulsbetrieb ist in einer Weiterbildung vorgesehen, dass bei der Scheinwerferfunktion Lumineszenzdiodenemitter aus der ersten Gruppe und aus mindestens einer weiteren Gruppe im ersten Teil, im zweiten Teil oder sowohl im ersten als auch im zweiten Teil der betriebenen Lumineszenzdiodenemitter enthalten sind. Die Lumineszenzdiodenemitter in der weiteren Gruppe sind in einer Matrix mit mindestens zwei Spalten und mindesten zwei Zeilen angeordnet. In der weiteren Gruppe sind, analog zur ersten Gruppe, die Lumineszenzdiodenchip mit einer Matrix- Verschaltung elektrisch miteinander verbunden.

Der erste Anschlusstyp der elektrischen Anschlüsse der weiteren Gruppe muss nicht identisch mit dem ersten Anschlusstyp der elektrischen Anschlüsse der ersten Gruppe sein. Die weitere Gruppe kann die zweite Gruppe oder aber auch eine dritte oder sonstige weitere Gruppe von Lumineszenzdiodenemittern sein.

In einer zweckmäßigen Ausführungsform ist der Scheinwerfer ein Frontscheinwerfer für ein Fortbewegungsmittel, insbesondere für ein Kraftfahrzeug.

Der Scheinwerfer weist gemäß einer Ausgestaltung mindestens zwei verschiedene Scheinwerferfunktionen auf, mit denen verschieden geformte Scheinwerferkegel emittierbar sind.

Bei dem Scheinwerfer weisen unmittelbar benachbarte Lumineszenzdiodenemitter zumindest der ersten Gruppe gemäß einer Ausgestaltung untereinander einen Abstand von kleiner oder gleich 100 µm oder keinen Abstand auf.

Bei einer vorteilhaften Ausführungsform des Scheinwerfers bestehen einige oder alle der Lumineszenzdiodenemitter aus einem Lumineszenzdiodenchip oder aus mehreren Lumineszenzdiodenchips. Es handelt sich bei solchen Lumineszenzdiodenemittern also nicht um Bauelemente mit einem Bauelementgehäuse, in dem der Lumineszenzdiodenchip integriert ist, sondern es sind gehäusefreie Lumineszenzdiodenchips als solche unmittelbar in dem Scheinwerfer integriert.

In einer weitergehenden Ausgestaltung des Scheinwerfers ist mindestens ein Lumineszenzdiodenchip enthalten, der zwei oder mehr Lumineszenzdiodenemitter aufweist. Durch die Integrierung von zwei oder mehr Lumineszenzdiodenemittern in einen Lumineszenzdiodenchip kann der Abstand der Lumineszenzdiodenemitter zueinander weiter verringert und ein Scheinwerfer mit einer hohen Leuchtdichte realisiert werden. Grundsätzlich können alle Lumineszenzdiodenemitter einer Gruppe in einem einzigen Lumineszenzdiodenchip integriert sein.

Bei einer weiteren Ausgestaltung des Scheinwerfers grenzt an die erste Gruppe oder an die zweite Gruppe oder eine etwaige weitere Gruppe, mindestens ein Lumineszenzdiodenemitter an. Einer der elektrischen Anschlüsse des mindestens einen Lumineszenzdiodenemitters ist elektrisch mit den elektrisch miteinander verbundenen Anschlüssen einer Spalte oder einer Zeile der entsprechenden Gruppe verbunden.

Bei einer zweckmäßigen Ausführungsform des Scheinwerfers wird jeder der Lumineszenzdiodenemitter mit einem Betriebsstrom von > 0,1 A, bevorzugt von > 0,5 A und besonders bevorzugt von > 0,8 A betrieben.

Die Matrix der jeweiligen Gruppe von Lumineszenzdiodenemittern muss nicht notwendigerweise eine symmetrische Matrix in dem Sinne sein, dass alle Zeilen jeweils gleich viele Lumineszenzdiodenemitter aufweisen und alle Spalten ebenfalls jeweils gleich viele Lumineszenzdiodenemitter aufweisen. Stattdessen ist es möglich, dass eine oder mehrere Zeilen mehr oder weniger Lumineszenzdiodenemitter aufweisen als die übrigen Zeilen. Entsprechendes gilt für die Spalten einer Gruppe.

Weitere Vorteile, bevorzugte Ausführungsformen und Weiterbildungen ergeben sich aus den im Folgenden in Verbindung mit den Figuren erläuterten Ausführungsbeispielen. Es zeigen:
Figur 1 eine schematische Veranschaulichung der Anordnung und elektrischen Verschaltung der Lumineszenzdiodenemitter des Scheinwerfers in einer Draufsicht. Diese Anordnung dient zum verbesserten Verständnis und weist nicht alle Merkmale der Erfindung auf;
Figur 2 eine schematische Veranschaulichung der Anordnung und elektrischen Verschaltung der Lumineszenzdiodenemitter des Scheinwerfers gemäß einem ersten Ausführungsbeispiel in einer Draufsicht;
Figur 3 eine schematische Draufsicht auf die Lumineszenzdiodenemitter des Scheinwerfers gemäß einem zweiten Ausführungsbeispiel;
Figur 4 eine schematische Draufsicht auf die Lumineszenzdiodenemitter des Scheinwerfers gemäß einem dritten Ausführungsbeispiel;
Figur 5 eine schematische Draufsicht auf die Lumineszenzdiodenemitter des Scheinwerfers gemäß einem vierten Ausführungsbeispiel;
Figur 6 eine schematische Draufsicht auf einen Teil der Lumineszenzdiodenemitter des Scheinwerfers gemäß einem fünften Ausführungsbeispiel;
Figur 7 eine schematische Seitenansicht auf zwei der in Figur 6 dargestellten Lumineszenzdiodenemitter;
Figur 8 eine schematische Draufsicht auf einen Teil der Lumineszenzdiodenemitter des Scheinwerfers gemäß einem sechsten Ausführungsbeispiel; und
Figur 9 eine schematische Seitenansicht auf zwei der in Figur 8 dargestellten Lumineszenzdiodenemitter.

In den Ausführungsbeispielen und Figuren sind gleiche oder gleich wirkende Bestandteile jeweils mit den gleichen Bezugszeichen versehen. Die dargestellten Bestandteile sowie die Größenverhältnisse der Bestandteile untereinander sind nicht als maßstabsgerecht anzusehen. Vielmehr können einige Details der Figuren zum besseren Verständnis übertrieben groß dargestellt sein.

In den Figuren sind lediglich die Lumineszenzdiodenemitter des jeweiligen Scheinwerfers und die jeweilige elektrische Verschaltung und Anordnung von diesen zueinander dargestellt.

Nicht dargestellt sind beispielsweise ein etwaiger Träger des Scheinwerfers, auf dem die Lumineszenzdiodenemitter angeordnet sind, etwaige Optiken, die den Lumineszenzdiodenemittern in Abstrahlrichtung nachgeordnet sind, ein etwaiges Gehäuse des Scheinwerfers oder etwaige elektronische Ansteuerschaltungen zum elektrischen Ansteuern der Lumineszenzdiodenemitter und zum Einstellen verschiedener Scheinwerferfunktionen des Scheinwerfers. Einige oder alle dieser Details können in dem Scheinwerfer enthalten sein.

Dem Fachmann sind mögliche Ausführungsformen derartiger Details eines Scheinwerfers allgemein bekannt. Deshalb sind der Übersichtlichkeit halber und zum besseren Verständnis derartige Details in den Figuren weggelassen worden.

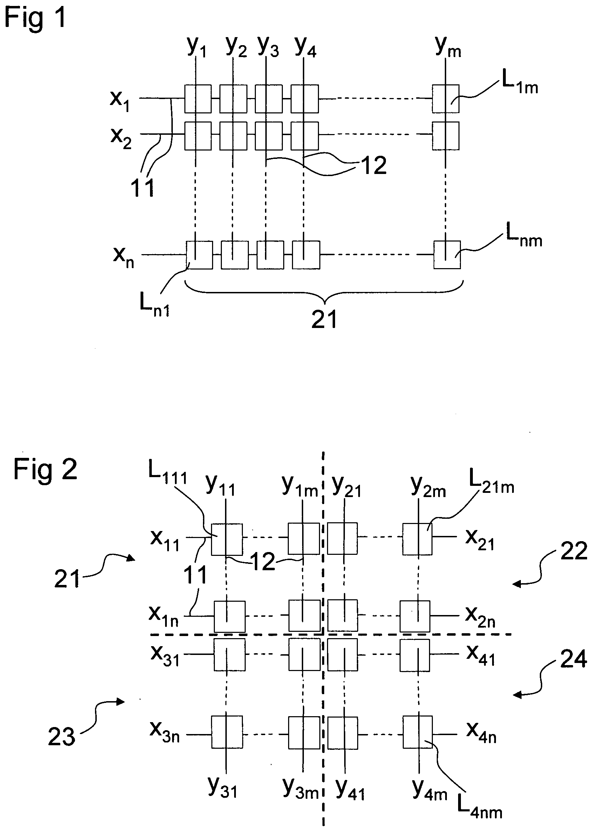

In Figur 1 ist eine Vielzahl von Lumineszenzdiodenemittern L eines nicht erfindungsgemäßen Beispiels eines Scheinwerfers veranschaulicht. Der Scheinwerfer weist eine erste Gruppe 21 von Lumineszenzdiodenemittern L auf. Alle Lumineszenzdiodenemitter L sind in der ersten Gruppe 21 enthalten. Die Lumineszenzdiodenemitter L sind in einer Matrix mit n Zeilen x₁ bis xₙ und mit m Spalten y₁ bis yₘ angeordnet.

Die Anordnung der Lumineszenzdiodenemitter L innerhalb einer Zeile x oder einer Spalte y kann, wie dargestellt, entlang einer Geraden sein. Dies ist jedoch nicht unbedingt erforderlich. Vielmehr können die Zeilen oder Spalten x, y auch mit Lumineszenzdiodenemittern L gebildet sein, die beispielsweise entlang einer gekrümmten Linie oder entlang einer Linie mit Knicken angeordnet sind. Im Falle einer Anordnung entlang einer Geraden müssen die Spalten und Zeilen nicht notwendigerweise jeweils parallel zueinander ausgerichtet sein.

Der Begriff Zeile oder Spalte bezieht sich im Zusammenhang der vorliegenden Anmeldung auf die relative Verschaltung der Lumineszenzdiodenemitter L zueinander und ist weitgehend unabhängig von einer speziellen geometrischen Anordnung der Lumineszenzdiodenemitter. Die Lumineszenzdiodenemitter einer Zeile oder einer Spalte folgen gemäß einer Ausführungsform des Scheinwerfers jeweils unmittelbar räumlich aufeinander, das heißt zwischen den Lumineszenzdiodenemittern L beispielsweise einer bestimmten Zeile x sind keine Lumineszenzdiodenemitter L einer anderen Zeile angeordnet.

In der ersten Gruppe 21 sind die elektrischen Anschlüsse eines ersten Anschlusstyps in jeder Spalte y jeweils elektrisch miteinander verbunden. Die elektrischen Anschlüsse eines zweiten Anschlusstyps sind in jeder Zeile x jeweils elektrisch miteinander verbunden.

Die elektrischen Anschlüsse des ersten Anschlusstyps sind zeilenweise jeweils mit einem elektrischen Leiter 11 elektrisch leitend miteinander verbunden. Entsprechend sind die elektrischen Anschlüsse des zweiten Anschlusstyps spaltenweise jeweils mittels eines elektrischen Leiters 12 elektrisch miteinander verbunden. Die elektrischen Leiter 11, 12 können jeweils einstückig ausgebildet sein. Alternativ können die elektrischen Leiter 11, 12 aber auch jeweils mehrere Teilstücke aufweisen, die insbesondere auch räumlich voneinander beabstandet sein können.

Durch diese Matrix-Verschaltung der Lumineszenzdiodenemitter L der ersten Gruppe ist eine effiziente Ansteuerung der Lumineszenzdiodenemitter L möglich und es lassen sich grundsätzlich eine Vielzahl verschiedener Emissionsmuster oder Emissionskegel mit dem Scheinwerfer realisieren.

Wenn an die Zeile x₁ und an die Spalte yₘ eine Spannung angelegt wird, leuchtet einzig der Lumineszenzdiodenemitter L₁ₘ. Wenn an die Zeile xₙ und die Spalte y₁ eine Spannung angelegt wird, leuchtet einzig der Lumineszenzdiodenemitter Lₙ₁. Wenn hierbei zusätzlich an die Spalte yₘ eine Spannung angelegt wird, leuchtet zusätzlich zu Lₙ₁ Lₙₘ. Wenn an alle Spalten y₁ bis yₘ und alle Zeilen x₁ bis xₙ eine Spannung angelegt wird, leuchten alle Lumineszenzdiodenemitter L der ersten Gruppe 21.

Bei einer Ansteuerung der Lumineszenzdiodenemitter L der ersten Gruppe 21 mit seriellem Pulsbetrieb lassen sich Scheinwerferkegel unter Verwendung einer beliebigen Auswahl der Lumineszenzdiodenemitter L der ersten Gruppe 21 realisieren. Darüber hinaus ist es selbstverständlich auch möglich, einige oder alle Lumineszenzdiodenemitter dauerhaft zu betreiben oder bei der Ansteuerungselektronik der ersten Gruppe 21 Scheinwerferfunktionen vorzusehen, bei denen ein Teil der betriebenen Lumineszenzdiodenemitter L dauerhaft betrieben wird und ein weiterer Teil im Pulsbetrieb betrieben wird.

Da für die Realisierung bestimmter Emissionsmuster die Anzahl der Untergruppen an Lumineszenzdiodenemittern L, die im Pulsbetrieb sequentiell nacheinander in Betrieb genommen werden, unvorteilhaft groß sein kann, ist bei dem in Figur 2 veranschaulichten ersten Ausführungsbeispiel nicht nur eine erste Gruppe 21 von Lumineszenzdiodenemittern L in Matrixverschaltung vorgesehen, sondern zusätzlich eine zweite Gruppe 22, eine dritte 23 und eine vierte Gruppe 24.

Grundsätzlich kann es eine beliebig große Anzahl solcher Gruppen geben, bei denen die Lumineszenzdiodenemitter L in der vorhergehend beschriebenen Matrixschaltung elektrisch leitend miteinander verbunden sind. Trotz mehrerer Gruppen von Lumineszenzdiodenemitter können alle Lumineszenzdiodenemitter des Scheinwerfers sehr nahe zusammen montiert werden, ohne dass Abstände zur Verdrahtung oder anderweitiger Beschaltung notwendig sind.

Bei dem in Figur 2 veranschaulichten Scheinwerfer kann beispielsweise durch Ansteuerung der Zeilen und Spalten x₁₁, y₁₁, y₁ₘ; x₃ₙ, y₃₁, y₃ₘ; und x₄₁, y₄₁ und y₄ₘ ausschließlich die Lumineszenzdiodenemitter L₁₁₁, L₁₁ₘ, L₃ₙ₁, L₃ₙₘ, L₄₁₁ und L₄₁ₘ in Betrieb genommen werden. Bei den Indices der Lumineszenzdiodenemitter L bezeichnet die erste Stelle die Nummer der Gruppe, die zweite Stelle die Zeile und die dritte Stelle die Spalte.

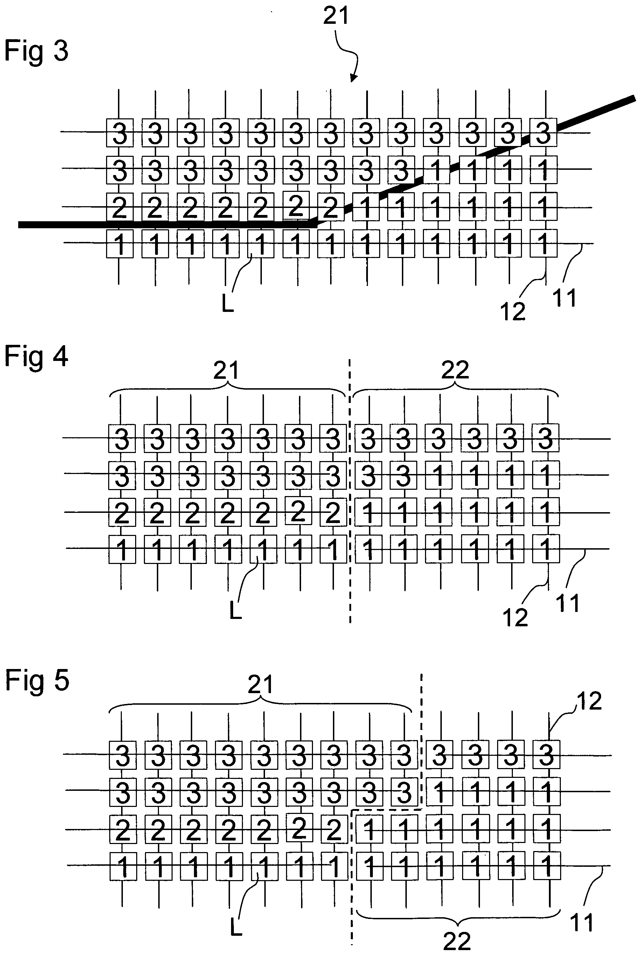

Bei dem in Figur 3 veranschaulichten zweiten Ausführungsbeispiel sind Lumineszenzdiodenemitter L für verschiedene Scheinwerferfunktionen mit Bezugszeichen gekennzeichnet. Lumineszenzdiodenemitter 1 für eine erste Scheinwerferfunktion, Lumineszenzdiodenemitter 2 für eine zweite Scheinwerferfunktion und Lumineszenzdiodenemitter 3 für eine dritte Scheinwerferfunktion.

Bei der ersten Scheinwerferfunktion werden nur die Lumineszenzdiodenemitter 1 in Betrieb genommen. Da alle Lumineszenzdiodenemitter L des Scheinwerfers in einer ersten Gruppe 21 enthalten und mit einer Matrix-Verschaltung elektrisch leitend miteinander verschalten sind, ist hierfür ein serieller Pulsbetrieb nötig. Die erste Scheinwerferfunktion entspricht beispielsweise einem Abblendlicht für ein Kraftfahrzeug, bei dem der obere Teil des emittierten Scheinwerferkegels im Querschnitt einen Knick von etwa 15° aufweist. Dies ist durch die dicken schwarzen Linien in Figur 3 angedeutet, die entsprechend einen Winkel von etwa 165° einschließen.

Bei einer zweiten Scheinwerferfunktion werden zusätzlich zu den Lumineszenzdiodenemittern 1 die Lumineszenzdiodenemitter 2 in Betrieb genommen. Auch dies erfolgt im Pulsbetrieb.

Bei einer dritten Scheinwerferfunktion werden beispielsweise alle Lumineszenzdiodenemitter 1, 2, 3 in Betrieb genommen. Dies erfolgt beispielsweise im Dauerbetrieb der Lumineszenzdiodenemitter. Die dritte Scheinwerferfunktion ist beispielsweise ein Fernlicht für ein Kraftfahrzeug.

Bei dem in Figur 4 veranschaulichten dritten Ausführungsbeispiel weist der Scheinwerfer im Unterschied zum zweiten Ausführungsbeispiel eine erste Gruppe 21 und eine zweite Gruppe 22 von Lumineszenzdiodenemittern L auf. Die Gruppen 21, 22 sind elektrisch voneinander isoliert, was durch die gestrichelte Linie veranschaulicht ist. Durch die Einteilung und Verschaltung in zwei Gruppen 21, 22 lassen sich beispielsweise die Lumineszenzdiodenemitter der ersten Gruppe 21 bei allen drei Scheinwerferfunktionen dauerhaft betreiben. Bei den Lumineszenzdiodenemittern der zweiten Gruppe 22 ist für die erste Scheinwerferfunktion dagegen ein Pulsbetrieb erforderlich.

Bei dem anhand Figur 5 veranschaulichten vierten Ausführungsbeispiel weist der Scheinwerfer ebenfalls eine erste Gruppe 21 und eine zweite Gruppe 22 von Lumineszenzdiodenemittern auf. Im Unterschied zum dritten Ausführungsbeispiel verläuft jedoch die Grenze zwischen der ersten und der zweiten Gruppe 21, 22 anders. Die Grenze ist durch die gestrichelte Linie veranschaulicht. Die Gruppen sind derart gebildet, dass in jeder Gruppe Zeilen oder Spalten vorhanden sind, die mehr Lumineszenzdiodenemitter aufweisen als andere Zeilen oder Spalten der Gruppe.

Durch diese Aufteilung der Gruppen 21, 22 ist es möglich, dass alle drei Scheinwerferfunktionen nur mit Dauerbetrieb der Lumineszenzdiodenemitter realisiert werden können. Ergänzend kann selbstverständlich auch ein Pulsbetrieb vorgesehen sein, beispielsweise für weitere, neuartige Scheinwerferfunktionen.

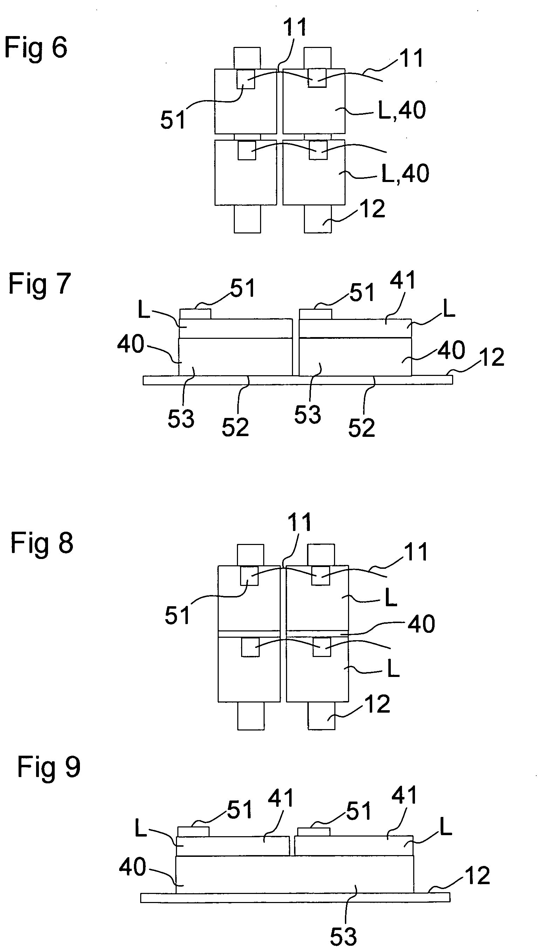

Die Lumineszenzdiodenemitter sind bevorzugt in Form von Lumineszenzdiodenchips 40 in dem Schweinwerfer integriert. Dies ist in den Figuren 6 und 7 veranschaulicht.

Elektrische Anschlüsse 51 eines ersten Anschlusstyps sind beispielsweise auf einer in Hauptabstrahlrichtung der Lumineszenzdiodenchips 40 gewandten Seite von diesen ausgebildet. Diese elektrischen Anschlüsse 51 können beispielsweise in Form von Bondpads ausgebildet sein.

Die elektrischen Anschlüsse 51 sind beispielsweise mittels Bonddrähten 11 zeilenweise oder spaltenweise elektrisch leitend miteinander verbunden. Alternativ zu Bonddrähten können diese elektrischen Anschlüsse 51 durch beliebige andere bekannte elektrischen Verbindungsmittel miteinander verschaltet werden.

Elektrische Anschlüsse 52 eines zweiten Anschlusstyps sind beispielsweise auf einer der Hauptabstrahlrichtung der Lumineszenzdiodenchips 40 abgewandten Seite von diesen angeordnet, siehe Figur 7. Mehrere dieser elektrischen Anschlüsse 52 können beispielsweise mittels einer Leiterbahn verbunden sein, auf der Sie elektrisch leitend montiert sind, z.B. mittels Lot oder elektrisch leitfähigem Klebstoff.

Jeder Lumineszenzdiodenchip weist beispielsweise eine epitaktische Halbleiterschichtenfolge 41 und ein Substrat oder einen Trägerkörper 53 auf. Die epitaktische Halbleiterschichtenfolge 41 umfasst eine aktive Zone, die geeignet ist, elektromagnetische Strahlung zu emittieren. Die epitaktische Halbleiterschichtenfolge weist beispielsweise mehrere Schichten mit oder aus einem III/V-Verbindungs-Halbleitermaterial auf.

Ein III/V-Verbindungs-Halbleitermaterial weist wenigstens ein Element aus der dritten Hauptgruppe, wie beispielsweise B, Al, Ga, In, und ein Element aus der fünften Hauptgruppe, wie beispielsweise N, P, As, auf. Insbesondere umfasst der Begriff "III/V-Verbindungs-Halbleitermaterial" die Gruppe der binären, ternären oder quaternären Verbindungen, die wenigstens ein Element aus der dritten Hauptgruppe und wenigstens ein Element aus der fünften Hauptgruppe enthalten, beispielsweise Nitrid- und Phosphid-Verbindungshalbleiter. Eine solche binäre, ternäre oder quaternäre Verbindung kann zudem zum Beispiel ein oder mehrere Dotierstoffe sowie zusätzliche Bestandteile aufweisen.

Bei einer weiteren Ausgestaltung ist der Lumineszenzdiodenchip ein Dünnfilm-Leuchtdiodenchip. Insbesondere weist er ein Trägersubstrat auf. Ein Dünnfilm-Leuchtdiodenchip zeichnet sich durch mindestens eines der folgenden charakteristischen Merkmale aus:
- an einer zu einem Trägerelement, insbesondere dem Trägersubstrat, hingewandten Hauptfläche der epitaktischen Halbleiterschichtenfolge ist eine reflektierende Schicht aufgebracht oder ausgebildet, die zumindest einen Teil der in der Halbleiterschichtenfolge erzeugten elektromagnetischen Strahlung in diese zurückreflektiert;
- der Dünnfilm-Leuchtdiodenchip weist ein Trägerelement auf, bei dem es sich nicht um das Wachstumssubstrat handelt, auf dem die Halbleiterschichtenfolge epitaktisch gewachsen wurde, sondern um ein separates Trägerelement, das nachträglich an der Halbleiterschichtenfolge befestigt wurde;
- die Halbleiterschichtenfolge weist eine Dicke im Bereich von 20 µm oder weniger, insbesondere im Bereich von 10 µm oder weniger auf;
- die Halbleiterschichtenfolge ist frei von einem Aufwachssubstrat. Vorliegend bedeutet "frei von einem Aufwachssubstrat", dass ein gegebenenfalls zum Aufwachsen benutztes Aufwachssubstrat von der Halbleiterschichtenfolge entfernt oder zumindest stark gedünnt ist. Insbesondere ist es derart gedünnt, dass es für sich oder zusammen mit der Epitaxie-Schichtenfolge alleine nicht freitragend ist. Der verbleibende Rest des stark gedünnten Aufwachssubstrats ist insbesondere als solches für die Funktion eines Aufwachssubstrates ungeeignet; und
- die Halbleiterschichtenfolge enthält mindestens eine Halbleiterschicht mit zumindest einer Fläche, die eine Durchmischungsstruktur aufweist, die im Idealfall zu einer annähernd ergodischen Verteilung des Lichtes in der Halbleiterschichtenfolge führt, das heißt, sie weist ein möglichst ergodisch stochastisches Streuverhalten auf. Allgemein ausgedrückt weist die Durchmischungsstruktur Strukturen auf, die geeignet sind, elektromagnetische Strahlung abzulenken, umzulenken oder zu streuen.

Ein Grundprinzip eines Dünnfilm-Leuchtdiodenchips ist beispielsweise in der Druckschrift I. Schnitzer et al., Appl. Phys. Lett. 63 (16) 18. Oktober 1993, Seiten 2174 - 2176 beschrieben, deren Offenbarungsgehalt insofern hiermit durch Rückbezug aufgenommen wird. Beispiele für Dünnfilm-Leuchtdiodenchips sind in den Druckschriften EP 0905797 A2 und WO 02/13281 A1 beschrieben, deren Offenbarungsgehalt insofern hiermit ebenfalls durch Rückbezug aufgenommen wird.

Ein Dünnfilm-Leuchtdiodenchip ist in guter Näherung ein Lambert'scher Oberflächenstrahler und eignet sich von daher beispielsweise gut für die Anwendung in einem Scheinwerfer, etwa einem Kraftfahrzeugscheinwerfer.

Bei dem in den Figuren 8 und 9 veranschaulichten Ausführungsbeispiel sind im Unterschied zu dem vorhergehend anhand der Figuren 6 und 7 veranschaulichten Ausführungsbeispiel zwei Lumineszenzdiodenemitter L durch einen einzigen Lumineszenzdiodenchip 40 gebildet. Beispielsweise weist der Lumineszenzdiodenchip 40 zwei Bereiche der epitaktischen Halbleiterschichtenfolge 41 auf, die nicht unmittelbar elektrisch miteinander verbunden sind, sondern beispielsweise nur über das Substrat oder den Trägerkörper 40. Jeder dieser zwei Teile der Halbleiterschichtenfolge 41 weist einen eigenen elektrischen Anschluss 51 auf, so dass effektiv zwei Lumineszenzdiodenemitter L innerhalb des Chips 40 gebildet sind, die unabhängig voneinander ansteuerbar sind. Grundsätzlich ist es beispielsweise auch möglich, dass beliebig viele Lumineszenzdiodenemitter in einem einzigen Lumineszenzdiodenchip 40 integriert sind. Beispielsweise können ganze Zeilen oder ganze Spalten einer Gruppe von Lumineszenzdiodenemittern des Scheinwerfers innerhalb eines einstückig ausgebildeten, lang gestreckten Lumineszenzdiodenchips integriert sein.
Es kann z.B. auch eine ganze Gruppe von Lumineszenzdiodenemittern des Scheinwerfers innerhalb eines einzigen Lumineszenzdiodenchips ausgebildet sein. Die Verschaltung ist in diesem Fall beispielsweise zumindest teilweise intern im Lumineszenzdiodenchip 40 gewährleistet, das heißt, der Lumineszenzdiodenchip wird derart hergestellt, dass die Matrixverschaltung der Lumineszenzdiodenemitter L zumindest teilweise bereits in ihm realisiert ist.

## Patentansprüche

1. Scheinwerfer mit einer Mehrzahl von Lumineszenzdiodenemittern (L), von denen mindestens eine erste Gruppe (21) in einer Matrix mit mindestens zwei Spalten (y₁, ..., yₘ) und mindestens zwei Zeilen (x₁, ..., xₙ) angeordnet ist, wobei die Lumineszenzdiodenemitter der ersten Gruppe jeweils zwei elektrische Anschlüsse von unterschiedlichem Anschlusstyp aufweisen und in der ersten Gruppe die elektrischen Anschlüsse (51) eines ersten Anschlusstyps spaltenweise jeweils elektrisch miteinander verbunden sind, die elektrischen Anschlüsse (52) eines zweiten Anschlusstyps zeilenweise jeweils elektrisch miteinander verbunden sind, die elektrischen Anschlüsse des ersten Anschlusstyps verschiedener Spalten elektrisch voneinander isoliert sind und die elektrischen Anschlüsse des zweiten Anschlusstyps verschiedener Zeilen elektrisch voneinander isoliert sind, und wobei mindestens eine zweite Gruppe (22) von Lumineszendiodenemittern enthalten ist, die in einer Matrix mit mindestens zwei Spalten und mindestens zwei Zeilen angeordnet ist, wobei die Lumineszenzdiodenemitter der zweiten Gruppe jeweils zwei elektrische Anschlüsse von unterschiedlichem Anschlusstyp aufweisen und in der zweiten Gruppe die elektrischen Anschlüsse eines ersten Anschlusstyps spaltenweise jeweils elektrisch miteinander verbunden sind, die elektrischen Anschlüsse eines zweiten Anschlusstyps zeilenweise jeweils elektrisch miteinander verbunden sind, die elektrischen Anschlüsse des ersten Anschlusstyps verschiedener Spalten elektrisch voneinander isoliert sind und die elektrischen Anschlüsse des zweiten Anschlusstyps verschiedener Zeilen elektrisch voneinander isoliert sind; wobei der Scheinwerfer eine Scheinwerferfunktion aufweist, bei der zumindest einige der Lumineszenzdiodenemitter der ersten und der zweiten Gruppe betrieben werden und ein oder mehr Lumineszenzdiodenemitter der ersten Gruppe, der zweiten Gruppe oder sowohl der ersten als auch der zweiten Gruppe nicht betrieben werden, wobei zumindest ein Teil der Lumineszenzdiodenemitter zur Erzeugung eines Scheinwerferkegels betrieben wird und mindestens ein erster und ein zweiter Teil der betriebenen Lumineszenzdiodenemitter in einem seriellen Pulsbetrieb betrieben wird und ein weiterer Teil der betriebenen Lumineszenzdiodenemitter durchgehend betrieben wird.

2. Scheinwerfer nach Anspruch 1,
wobei mehr als die Hälfte der Lumineszenzdiodenemitter in der ersten Gruppe enthalten sind.

3. Scheinwerfer nach Anspruch 1 oder 2,
wobei bei der Scheinwerferfunktion Lumineszenzdiodenemitter aus der ersten Gruppe und aus mindestens einer weiteren Gruppe im ersten Teil, im zweiten Teil oder sowohl im ersten als auch im zweiten Teil der betriebenen Lumineszenzdiodenemitter enthalten sind, wobei die Lumineszenzdiodenemitter in der weiteren Gruppe jeweils zwei elektrische Anschlüsse von unterschiedlichem Anschlusstyp aufweisen und in der weiteren Gruppe
die elektrischen Anschlüsse eines ersten Anschlusstyps spaltenweise jeweils elektrisch miteinander verbunden sind, die elektrischen Anschlüsse eines zweiten Anschlusstyps zeilenweise jeweils elektrisch miteinander verbunden sind, die elektrischen Anschlüsse des ersten Anschlusstyps verschiedener Spalten elektrisch voneinander isoliert sind und die elektrischen Anschlüsse des zweiten Anschlusstyps verschiedener Zeilen elektrisch voneinander isoliert sind.

4. Scheinwerfer nach einem der vorhergehenden Ansprüche, der ein Frontscheinwerfer für ein Fortbewegungsmittel ist.

5. Scheinwerfer nach einem der vorhergehenden Ansprüche, der mindestens zwei verschiedene Scheinwerferfunktionen mit verschieden geformten Scheinwerferkegeln aufweist.

6. Scheinwerfer nach einem der vorhergehenden Ansprüche, wobei unmittelbar benachbarte Lumineszenzdiodenemitter zumindest der ersten Gruppe einen Abstand von kleiner als oder gleich 100 µm oder keinen Abstand zueinander aufweisen.

7. Scheinwerfer nach einem der vorhergehenden Ansprüche, wobei alle Lumineszenzdiodenemitter in einem Lumineszenzdiodenchip enthalten sind.

8. Scheinwerfer nach einem der vorhergehenden Ansprüche, wobei mindestens ein Lumineszenzdiodenchip enthalten ist, der zwei oder mehr Lumineszenzdiodenemitter aufweist.

9. Scheinwerfer nach einem der vorhergehenden Ansprüche, wobei für alle oder zumindest für einen Großteil der Lumineszenzdiodenemitter der ersten Gruppe ein Betriebsstrom von größer als 0,1 A vorgesehen ist.

10. Scheinwerfer nach einem der vorhergehenden Ansprüche, wobei für alle oder zumindest für einen Großteil der Lumineszenzdiodenemitter der ersten Gruppe ein Betriebsstrom von größer als 0,5 A vorgesehen ist.

11. Scheinwerfer nach einem der vorhergehenden Ansprüche, wobei für alle oder zumindest für einen Großteil der Lumineszenzdiodenemitter der ersten Gruppe ein Betriebsstrom von größer als 0,8 A vorgesehen ist.

## Claims

1. A headlight comprising a plurality of luminescence diode emitters, at least one first group of which is arranged in a matrix having at least two columns and at least two rows, wherein the luminescence diode emitters of the first group in each case have two electrical connections of different connection types and in the first group
the electrical connections of a first connection type are in each case electrically connected to one another in a column-by-column manner, the electrical connections of a second connection type are in each case electrically connected to one another in a row-by-row manner,
the electrical connections of the first connection type of different columns are electrically insulated from one another, and the electrical connections of the second connection type of different rows are electrically insulated from one another, and wherin at least one second group of luminescence diode emitters is contained which is arranged in a matrix having at least two columns and at least two rows, wherein the luminescence diode emitters of the second group in each case have two electrical connections of different connection types and in the second group the electrical connections of a first connection type are in each case electrically connected to one another in a column-by-column manner, the electrical connections of a second connection type are in each case electrically connected to one another in a row-by-row manner,the electrical connections of the first connection type of different columns are electrically insulated from one another, and the electrical connections of the second connection type of different rows are electrically insulated from one another,
wherein the headlight has a headlight function in which at least some of the luminescence diode emitters of the first and of the second group are operated and one or more luminescence diode emitters of the first group, of the second group or both of the first and of the second group are not operated, wherein at least a portion of the luminescence diode emitters is operated for generating a headlight cone and at least one first and one second portion of the operated luminescence diode emitters are operated in a serial pulsed operation mode and a further portion of the operated luminescence diode emitters is operated continuously.

2. The headlight as claimed in claim 1,
wherein more than half of the luminescence diode emitters are contained in the first group.

3. The headlight as claimed in claim 1 or 2,
wherein, in the headlight function, luminescence diode emitters from the first group and from at least one further group are contained in the first portion, in the second portion or both in the first and in the second portion of the operated luminescence diode emitters, wherein the luminescence diode emitters in the further group in each case have two electrical connections of different connection types and in the further group
the electrical connections of a first connection type are in each case electrically connected to one another in a column-by-column manner, the electrical connections of a second connection type are in each case electrically connected to one another in a row-by-row manner,
the electrical connections of the first connection type of different columns are electrically insulated from one another, and the electrical connections of the second connection type of different rows are electrically insulated from one another.

4. The headlight as claimed in any of the preceding claims, which is a front headlight for a means of locomotion.

5. The headlight as claimed in any of the preceding claims, which has at least two different headlight functions having differently shaped headlight cones.

6. The headlight as claimed in any of the preceding claims, wherein directly adjacent luminescence diode emitters of at least the first group have a distance of less than or equal to 100 µm or no distance with respect to one another.

7. The headlight as claimed in any of the preceding claims, wherein all of the luminescence diode emitters are contained in a luminescence diode chip.

8. The headlight as claimed in any of the preceding claims, wherein at least one luminescence diode chip is contained which has two or more luminescence diode emitters.

9. The headlight as claimed in any of the preceding claims, wherein an operating current of greater than 0.1 A is provided for all or at least for a large portion of the luminescence diode emitters of the first group.

10. The headlight as claimed in any of the preceding claims, wherein an operating current of greater than 0.5 A is provided for all or at least for a large portion of the luminescence diode emitters of the first group.

11. The headlight as claimed in any of the preceding claims, wherein an operating current of greater than 0.8 A is provided for all or at least for a large portion of the luminescence diode emitters of the first group.

## Revendications

1. Projecteur comprenant une pluralité d'émetteurs à diodes électroluminescentes (L), parmi lesquels au moins un premier groupe (21) est arrangé en une matrice comportant au moins deux colonnes (y₁, ..., yₘ) et au moins deux lignes (x₁, ..., xₙ), les émetteurs à diodes électroluminescentes du premier groupe possédant respectivement deux bornes électriques de types de raccordement différents et, dans le premier groupe, les bornes électriques (51) d'un premier type de raccordement étant respectivement reliées électriquement entre elles en colonnes, les bornes électriques (52) d'un deuxième type de raccordement étant respectivement reliées électriquement entre elles en lignes, les bornes électriques du premier type de raccordement des différentes colonnes étant isolées électriquement les unes des autres et les bornes électriques du deuxième type de raccordement des différentes lignes étant isolées électriquement les unes des autres, et au moins un deuxième groupe (22) d'émetteurs à diodes électroluminescentes étant inclus, lequel est arrangé en une matrice comportant au moins deux colonnes et au moins deux lignes, les émetteurs à diodes électroluminescentes du deuxième groupe possédant respectivement deux bornes électriques de types de raccordement différents et, dans le deuxième groupe, les bornes électriques d'un premier type de raccordement étant respectivement reliées électriquement entre elles en colonnes, les bornes électriques d'un deuxième type de raccordement étant respectivement reliées électriquement entre elles en lignes, les bornes électriques du premier type de raccordement des différentes colonnes étant isolées électriquement les unes des autres et les bornes électriques du deuxième type de raccordement de différentes lignes étant isolées électriquement les unes des autres ; le projecteur possédant une fonction de projecteur avec laquelle au moins certains des émetteurs à diodes électroluminescentes du premier et du deuxième groupe sont mis en service et un ou plusieurs émetteurs à diodes électroluminescentes du premier groupe, du deuxième groupe ou à la fois du premier et du deuxième groupe ne sont pas mis en service, au moins une partie des émetteurs à diodes électroluminescentes étant mis en service pour générer un cône lumineux de projecteur et au moins une première et une deuxième partie des émetteurs à diodes électroluminescentes en service fonctionnent dans un régime impulsionnel en série et une autre partie des émetteurs à diodes électroluminescentes en service fonctionnent en continu.

2. Projecteur selon la revendication 1, plus de la moitié des émetteurs à diodes électroluminescentes étant inclus dans le premier groupe.

3. Projecteur selon la revendication 1 ou 2, avec lequel, lors de la fonction de projecteur, les émetteurs à diodes électroluminescentes du premier groupe et d'au moins un groupe supplémentaire sont inclus dans la première partie, dans la deuxième partie ou à la fois dans la première et dans la deuxième partie des émetteurs à diodes électroluminescentes mis en service, les émetteurs à diodes électroluminescentes dans le groupe supplémentaire possédant respectivement deux bornes électriques de types de raccordement différents et, dans le groupe supplémentaire, les bornes électriques d'un premier type de raccordement étant respectivement reliées électriquement entre elles en colonnes, les bornes électriques d'un deuxième type de raccordement étant respectivement reliées électriquement entre elles en lignes, les bornes électriques du premier type de raccordement de différentes colonnes étant isolées électriquement les unes des autres et les bornes électriques du deuxième type de raccordement de différentes lignes étant isolées électriquement les unes des autres.

4. Projecteur selon l'une des revendications précédentes, lequel est un projecteur avant pour un moyen de transport.

5. Projecteur selon l'une des revendications précédentes, lequel possède au moins deux fonctions de projecteur différentes avec des cônes lumineux de projecteur de formes différentes.

6. Projecteur selon l'une des revendications précédentes, des émetteurs à diodes électroluminescentes directement voisins au moins du premier groupe présentant un écart inférieur ou égal à 100 µm ou aucun écart entre eux.

7. Projecteur selon l'une des revendications précédentes, tous les émetteurs à diodes électroluminescentes étant inclus dans une puce de diode électroluminescente.

8. Projecteur selon l'une des revendications précédentes, au moins une puce de diode électroluminescente étant incluse, laquelle possède un ou plusieurs émetteurs à diodes électroluminescentes.

9. Projecteur selon l'une des revendications précédentes, un courant de fonctionnement supérieur à 0,1 A étant prévu pour tous ou au moins pour une grande partie des émetteurs à diodes électroluminescentes du premier groupe.

10. Projecteur selon l'une des revendications précédentes, un courant de fonctionnement supérieur à 0,5 A étant prévu pour tous ou au moins pour une grande partie des émetteurs à diodes électroluminescentes du premier groupe.

11. Projecteur selon l'une des revendications précédentes, un courant de fonctionnement supérieur à 0,8 A étant prévu pour tous ou au moins pour une grande partie des émetteurs à diodes électroluminescentes du premier groupe.
